Europäisches Patentamt

European Patent Office

Office européen des brevets

(11) Publication number: **0 280 149 B1**

# EUROPEAN PATENT SPECIFICATION

(45) Date of publication of patent specification: **07.10.92**    (51) Int. Cl.⁵: **B60S  1/32**, B60S 1/38, B60S 1/40

(21) Application number: **88102197.6**

(22) Date of filing: **15.02.88**

(54) **Perfected windshield wiper.**

(30) Priority: **27.02.87 IT 6714587**

(43) Date of publication of application:
**31.08.88 Bulletin  88/35**

(45) Publication of the grant of the patent:
**07.10.92 Bulletin  92/41**

(84) Designated Contracting States:
**DE ES FR GB SE**

(56) References cited:
**DE-U- 8 522 252**
**FR-A- 2 526 382**
**FR-A- 2 563 481**

(73) Proprietor: **FIAT AUTO S.p.A.**
**Corso Giovanni Agnelli 200**
**I-10135 Torino(IT)**

(72) Inventor: **Grassini, Osvaldo**
**Via Giuseppe Ciotta, 28**
**I-10100 Torino(IT)**

(74) Representative: **Prato, Roberto et al**
**STUDIO TORTA Società Semplice Via Viotti 9**
**I-10121 Torino(IT)**

EP 0 280 149 B1

# Description

The present invention relates to a perfected windshield wiper suitable for fitment to vehicles and, in particular, designed to ensure optimum wiping of the windshield under all atmospheric conditions and at any vehicle speed, even in the presence of a single wiper blade.

The wiping efficiency of a windshield wiper is known to depend on the pressure exerted by the wiper blade on the glazing surface of the windshield as the blade swings back and forth. On known windshield wipers, both single- and conventional two-blade types, the wiper blade, formed from flexible material such as rubber, is carried on a complex blade carrier member which, in turn, is carried via an articulated joint on a rigid arm connected, in radially-projecting manner and by means of a further articulated device, to a cap-shaped connecting element mounted angularly rigid with a control pin. Reciprocal rotation of the said pin, which is controlled by a motor, activates the wiper by swinging the arm and respective blade through a given arc. Correct pressure of the wiper blade over the entire wiped area should be guaranteed partly by the articulated device between the arm and connecting element, for which purpose it is provided with a spring, and partly by the design of the blade carrier member, which should provide for a certain amount of blade distortion for adapting to the varying curvature of the windshield at various points along the wipe trajectory. Unfortunately, and on single-blade wipers, in particular, which feature a larger-size blade than conventional two-blade types, the above provisions are insufficient for ensuring correct pressure of the wiper blade and, consequently, optimum wiping performance, over the entire wiped area. Furthermore, the complex, cumbersome assembly consisting of the blade carrier member, articulated joint and arm, creates numerous streamlining problems, which may result in noise, an increase in the drag coefficient of the vehicle, and worse still, partial or total detachment of the wiper blade from the windshield, thus reducing or removing all contact pressure between the blade and windshield, and, consequently, impairing both wiping performance and visibility.

The aim of the present invention is to provide a windshield wiper designed to overcome the aforementioned drawbacks, i.e. a wiper of straightforward, compact design, that is easy and cheap to manufacture, and provides for both optimum wiping performance and streamlining. With this aim in view, according to the present invention, there is provided a windshield wiper as defined in Claim 1.

Further developments in line with claim 1 are referred to in the dependent claims.

Two non-limiting embodiments of the present invention will be described by way of example with reference to the accompanying drawing, in which :

Fig.s 1 and 2 show partially-sectioned longitudinal views of two embodiments of the windshield wiper according to the present invention;

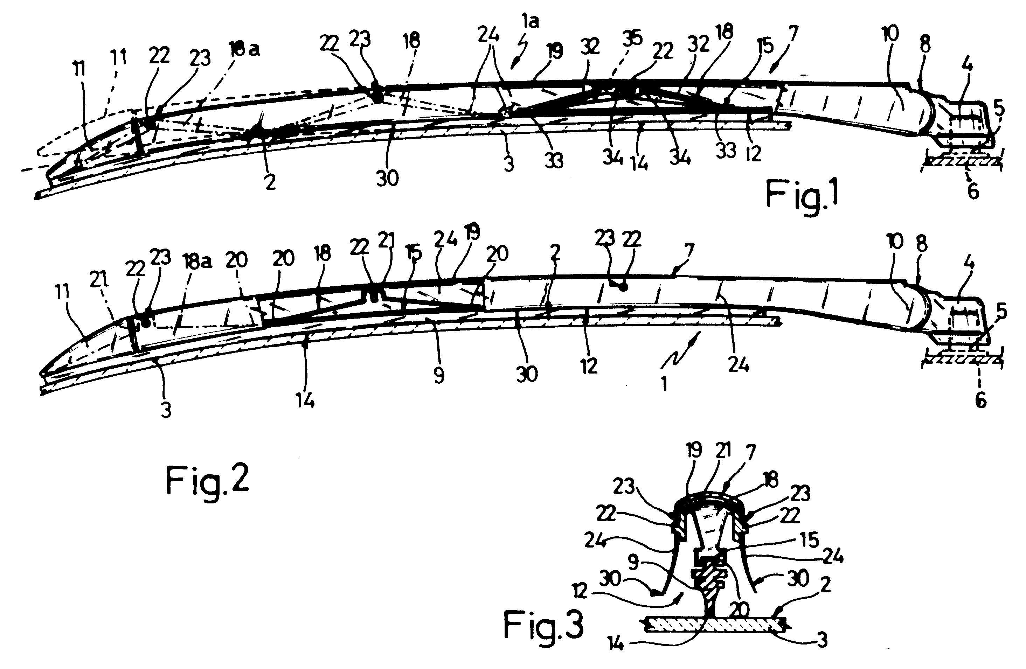

Fig.3 shows a cross section of the Fig.2 wiper.

Number 1 in Fig.s 2 and 3 indicates a windshield wiper, in particular, a single-blade wiper, for wiping the outer surface 2 of a windshield 3 of any curvature, or the glazing surface of a backlight or headlight on a known vehicle (not shown), e.g. an automobile. Wiper 1 comprising a known cap-shaped connecting element 4 designed to fit angularly integral with a rotary pin 5 controlling wiper 1, supported on body 6 of the said vehicle (not shown), and powered by a known motor (not shown); an arm 7 carried in radially-projecting manner on the said connecting element 4 and connected angularly integral with the same by means of an articulated device 8; and a flexible wiper blade 9 formed in one piece from elastomeric material, e.g. rubber, and mounted integral with arm 7. Blade 9 is of known type, and formed so as to cooperated in sliding manner with, and wipe, the said surface 2 by moving over the same at a given pressure. Such pressure is provided by arm 7, partly by means of articulated joint 8, which may be provided in known manner with a spring (not shown) and is designed to enable rotation of end 10 of arm 7, adjacent to connecting element 4, about an axis perpendicular to the axis of rotation of pin 5 and substantially parallel with the plane of windshield 3, and partly, according to the present invention, by virtue of the special design of arm 7 itself. For the sake of simplicity, no further description will be given of articulated device 8, which is a commonly known type, substantially identical to those employed on known windshield wipers currently available on the market.

According to the present invention, instead of being carried on a blade carrier member connected to arm 7, as on known windshield wipers, blade 9 is carried directly on arm 7, which consists of a rigid, streamlined structure of such a length as to fully accommodate blade 9, and terminating, at the connecting element 4 end, in end 10 incorporated inside articulated joint 8, and, at the opposite end, in a longitudinally-tapered cap 11 defining the end of structure 7 opposite the said end 10. Streamlined structure or arm 7 may be formed from bent sheet metal, or molded from synthetic plastic, and is shaped longitudinally so as to substantially match the mean curvature of surface 2. As, for reasons of streamlining, the said surface 2 is usually curved, structure 7 is also curved and presents, at each longitudinal point, a concentric radius of curvature slightly greater than that of surface 2. The cross section of structure 7, on the other hand, is substantially constant, and substantially in the form of an inverted U with its open end facing downwards in the direction of windshield 3. Blade 9 is housed longitudinally over its entire length inside structure or arm 7, and is arranged in line with structure 7 in an open bottom portion 12 of the same, with its bottom longitudinal wiping edge 14 projecting downwards beyond portion 12 and in the direction of windshield 3. The top longitudinal edge 15 of flexible blade 9, opposite the said edge 14 and preferably having a T-shaped section, is connected with structure or arm 7 so as to form a single unit therewith via elastic means 18 housed inside structure 7, between a bottom wall 19 of the same and blade 9. The said elastic means are defined by a number of flexible V-shaped bows 18 arranged side by side, preferably singly, in a row along the entire length of structure 7, with their respective opposite ends 20 arranged adjacent to one another and secured integral with edge 15, and with a respective center line portion 21, at the tip of the V defined by each bow 18, hinged to structure 7 in such a manner as to enable bows 18 to rock about respective axes parallel with each other and with the rotation axis of articulated device 8, and all lying crosswise in relation to the longitudinal axis of structure or arm 7.

In more detail, the said bows 18 present, on the said center line portion 21, respective opposed transverse projecting pins 22 engaged in idle manner inside respective pairs of coaxial transverse holes 23 formed through respective side walls 24 of structure 7. In the embodiment shown in Fig.s 2 and 3, each of the said bows 18 consists of a single flexible element formed from plastic or spring steel and shaped in the form of an inverted V, the center line portion 21 of which is substantially omega-shaped with integral laterally-projecting pins 22, which click inside lateral holes or seats 23, crosswise in relation to the axis of structure 7. Cap 11 is defined outwards by a curved surface, and is connected in rocking manner to the rest of structure 7 by pivoting on pins 22 of adjacent bow 18 which, numbered 18a in Fig.2, may be asymmetrical in relation to portion 21, depending on the length of cap 11. Cap 11 is thus free to rock, together with element 18a, in relation to the rest of structure 7, so as to adapt its position to the local curvature of windshield 3. According to the present invention, bows 18 are formed from materials having different elastic properties, or in slightly different shapes or sections, so as to present varying grades of rigidity. Flexible blade 9 is thus secured to rigid structure 7 by restraints differing in rigidity at various points on the structure and consequently also on windscreen 3, so as to produce a flexible connection varying in rigidity at various points between blade 9 and arm 7, and designed to resist, with given force, any displacement of blade 9 inwards of structure 7 (which results in compression and consequent springback of bows 18), while at the same time permitting varying longitudinal flexure of blade 9 at various points along the same, for enabling the blade contour to adapt continuously to the curvature of surface 2, even in the presence of continuous random variations in the same. Finally, for preventing lift-off of blade 9 at high vehicle speeds, the cross-section of the streamlined structure defining arm 7 presents opposite longitundinal edges 30 tapering outwards in thickness, curving away from each other, and located a given, relatively small distance from edge 14, so as to skim surface 2. In actual use, arm 7, in the idle position against one side of windshield 3, maintains the required contact pressure between edge 14 and surface 2 by virtue of the known performance of articulated joint 8. Reciprocal rotation of pin 5 causes arm 7 to move parallel with windshield 3, thus causing edge 14 to slide over and to wipe surface 2. During such displacement, rocking bows 18 enable flexible blade 9 to adapt to any variations in the curvature of windshield 3 by allowing it to make differential adjustment to its own curvature at various points along its length, thus maintaining, at each point on surface 2, the correct contact pressure imposed by articulated joint 8 between surface 2 and edge 14, and ensuring optimum wiping of windshield 3. Streamlining of arm 7 and installation of blade 9 inside the same reduce or eliminate aerodynamic disturbance, thus preventing noise or whistling at high vehicle speeds. Furthermore, the shape of edges 30 provides for effective downflow for maintaining blade grip on the windshield and preventing lift-off of the blade under all driving conditions. Finally, streamlined structure 7 also provides for effective removal of large quantities of packed snow off windshield 3.

Fig.1 shows a windshield wiper 1a identical to wiper 1 except for the design of bows 18. For the sake of simplicity, components or details similar or identical to those already described will be referred to using the same numbering system. Each of bows 18 on windshield wiper 1a consists of a pair of oblique arms 32 having a first end 33 secured integral with blade 9 and a second opposite end 34 pivoting on a common pin 22 fitted crosswise inside structure 7; and a spring 35 designed to force arms 32 towards each other by rotating respective ends 34 pivoting on pin 22. By regulating the rigidity of spring 35, the rigidity of bow 18 as a whole may be regulated to produce the same effect already described in connection with windshield wiper 1. Operation of wiper 1a is also identical to that of wiper 1.

The advantages of the present invention will be clear from the foregoing description. In addition to providing for a windshield wiper involving practically no aerodynamic disturbance and capable of effectively wiping glazing surfaces presenting random variations in curvature, it is also cheap to produce, by virtue of consisting of a small number of component parts as compared with known windshield wipers. Besides being employed singly, the windshield wiper according to the present invention may, of course, be employed in conjunction with a second symmetrical wiper activated by a second control pin, thus enabling the advantages of the present invention to be extended also to two-blade windshield wipers.

**Claims**

1.  A windshield wiper (1, 1a) comprising a cap-shaped connecting element (4) mounted angularly integral with a rotary pin (5) controlling the said wiper; an arm (7) carried in radially-projecting manner on the said connecting element (4) and connected angularly rigid with the same (4) by means of an articulated device (8); and a flexible wiper blade (9) carried by the said arm (7) and designed to cooperate in sliding manner with the outer surface of the windshield (3); characterised by the fact that the said arm consists of a hollow, rigid, streamlined structure (7) which is curved and presents, at each longitudinal point, a concentric radius of curvature slightly greater than that of the outer surface (2) of the windshield (3), which presents a substantially U-shaped cross-section, and longitudinally houses the said wiper blade (9) over its entire length; the said wiper blade (9) being arranged in an open bottom portion (12) of the said streamlined structure, with its longitudinal wiping edge (14) projecting downwards from the said streamlined structure in the direction of the said windshield; the said windshield wiper also comprising elastic means (18, 18a) housed inside the said streamlined structure (7) and mechanically connecting the same to the said wiper blade (9); the said elastic means urging with a predetermined force the said wiper blade (9) outwards of the said streamlined structure (7), and being constrained in such a manner as to allow the wiper blade to assume different curvatures at various points along the same.

2.  A windshield wiper as claimed in Claim 1, characterised by the fact that the said elastic means comprise a number of flexible V-shaped bows (18, 18a) arranged side by side in a row over the entire length of the said streamlined structure (7), with their respective opposite ends (20, 33) adjacent to one another; and said bows (18, 18a) being hinged, along the center line, to the said streamlined structure (7) so as to rock about respective axes parallel with one another and all located crosswise in relation to the longitudinal axis of the said arm (7).

3.  A windshield wiper as claimed in Claim 2, characterised by the fact that the said articulated device (8) is designed to enable the end of the said arm (7) adjacent to the said connecting element (4) to rotate about an axis perpendicular to the axis of rotation of the said control pin (5) and substantially parallel with the plane of the said windshield (3).

4.  A windshield wiper as claimed in Claim 3, characterised by the fact that the said opposite ends (20, 33) of the said bows (18, 18a) are secured integral with the top edge (15) of the said wiper blade (9), opposite the said wiping edge (14) of the same; and the center line of the said bows (18, 18a) coincides with the tip of the V defined by each said bow (18, 18a), and presents respective opposite transverse pins (22) engaged inside respective pairs of coaxial holes (23) formed through respective side walls (24) on the said streamlined structure (7), so as to rock about axes parallel with the axis of rotation of the said articulated device (8).

5.  A windshield wiper as claimed in one of the foregoing Claims from 2 to 4, characterised by the fact that each said blow (18) consists of a pair of oblique arms (32) having a first end (33) secured integral with the said wiper blade (9) and a second opposite end (34) hinged at a common point (22) to the said streamlined structure (7); and a spring (35) designed to force the said two arms (32) towards each other by rotating the said opposite ends (34) pivoting in common.

6.  A windshield wiper as claimed in one of the foregoing Claims from 2 to 4, characterised by the fact that each said bow (18) consists of a single flexible element substantially in the form of an inverted V having its tip on a center line portion (21) of the said element; said center line portion (21) being substantially omega-shaped and having a pair of opposed laterally-projecting pins (22) designed to click inside respective lateral seats (23) formed through the said streamlined structure (7) and crosswise in relation to the axis of the same.

7. A windshield wiper as claimed in one of the foregoing Claims, characterised by the fact that the said streamlined structure comprises a longitudinally-tapered cap (11) defining a first end of the said streamlined structure (7) opposite a second end of the same adjacent to the said articulated device (8); the said cap (11) being hinged to the rest of the said streamlined structure (7) coaxially with the rocking axis of a first (18a) of the said bows, adjacent to the said cap (11), so as to rock together with the same.

8. A windshield wiper as claimed in one of the foregoing Claims, characterised by the fact that the cross section of the said streamlined structure (7) presents opposite longitudinal edges (30) tapering outwards in thickness, curving away from each other, and located a given, relatively small distance from the said wiping edge (14) of the said blade (9), so as to skim, in use, the said outer surface (2) of the said windshield (3).

9. A windshield wiper as claimed in one of the foregoing Claims, characterised by the fact that the rigidity of the said elastic means (18) varies at various points on the said wiper blade (9).

**Patentansprüche**

1. Scheibenwischer (1, 1a), der ein aufsatzförmiges Verbindungselement (4), das einstückig im Winkel mit dem Drehstift (5) verbunden ist, der den Wischer steuert; einen Arm (7), der in radial vorstehender Weise auf dem Verbindungselement (4) gehalten wird und durch eine gegliederte Einrichtung (8) im Winkel starr mit diesem (4) verbunden ist; und ein flexibles Wischerblatt (9) umfaßt, das durch diesen Arm (7) gehalten wird und so gestaltet ist, daß es in gleitender Weise mit der Außenoberfläche der Windschutzscheibe (3) in Wechselwirkung steht; dadurch gekennzeichnet, daß der Arm aus einer hohlen, starren, stromlinienförmigen Struktur (7) besteht, die gekrümmt ist und an jedem Längspunkt einen konzentrischen Krümmungsradius zeigt, der etwas größer als der der Außenoberfläche (2) der Windschutzscheibe (3) ist, wobei diese Struktur einen im wesentlichen V-förmigen Querschnitt aufweist und das Wischerblatt (9) über seine gesamte Länge in Längsrichtung umgibt; wobei das Wischerblatt (9) im offenen unteren Abschnitt (12) der stromlinienförmigen Struktur angeordnet ist, wobei die längs verlaufende Wischerkante (14) nach unten aus dieser stromlinienförmigen Struktur in Richtung der Windschutzscheibe vorsteht; wobei der Scheibenwischer auch eine elastische Einrichtung (18, 18a) umfaßt, die innerhalb der stromlinienförmigen Struktur (7) enthalten ist und diese mit dem Wischerblatt (9) mechanisch verbindet, wobei die elastische Einrichtung das Wischerblatt (9) mit einer bestimmten Kraft aus der stromlinienförmigen Struktur (7) drückt und in einer solchen Weise gezwungen wird, daß das Wischerblatt an unterschiedlichen Punkten entlang des Blattes unterschiedliche Krümmungen annehmen kann.

2. Scheibenwischer nach Anspruch 1, dadurch gekennzeichnet, daß die elastische Einrichtung eine Anzahl flexibler V-förmiger Bögen (18, 18a) umfaßt, die nebeneinander über die gesamte Länge der stromlinienförmigen Struktur (7) in einer Reihe angeordnet sind, wobei ihre entsprechenden entgegengesetzten Enden (20, 33) einander benachbart sind; wobei die Bögen (18, 18a) entlang der Mittellinie schwenkbar an diese stromlinienförmige Struktur (7) angebracht sind, so daß sie parallel zueinander um entsprechende Achsen schwenken, wobei alle im Verhaltnis zur Längsachse des Armes (7) kreuzweise angeordnet sind.

3. Scheibenwischer nach Anspruch 2, dadurch gekennzeichnet, daß die gegliederte Einrichtung (8) so gestaltet ist, daß sich das Ende des Armes (7) neben dem Verbindungselement (4) um eine Achse, die zur Rotationsachse des Regelstiftes (5) senkrecht ist, und im wesentlichen parallel zur Ebene der Windschutzscheibe (3) drehen kann.

4. Scheibenwischer nach Anspruch 3, dadurch gekennzeichnet, daß die entgegengesetzten Enden (20, 33) der Bögen (18, 18a) einstückig mit der Oberkante (15) des Wischerblattes (9) entgegengesetzt zur Wischerkante (14) dieses Blattes angebracht sind; und die Mittellinie der Bögen (18, 18a) mit der Spitze des V zusammenfällt, das durch jeden Bogen (18, 18a) definiert wird, und entsprechende entgegengesetzte Querstifte (22) aufweist, die in die entsprechenden Paare der koaxialen Löcher (23) eingreifen, die durch die entsprechenden Seitenwände (24) auf der stromlinienförmigen Struktur (7) gebildet werden, so daß sie um Achsen schwenken, die zur Rotationsachse der gegliederten Einrichtung (8) parallel sind.

5. Scheibenwischer nach einem der vorstehenden Ansprüche 2 bis 4, dadurch gekennzeichnet, daß jeder der Bögen (18) aus einem Paar schräger Arme (32) mit einem ersten Ende (33), das einstückig mit dem Wischerblatt (9) verbunden ist, und einem zweiten entgegengesetzten Ende (34), das an einem gemeinsamen Punkt (22) schwenkbar an der stromlinienförmigen Struktur (7) hängt; und einer Feder (35) besteht, die so gestaltet ist, daß sie die beiden Arme (32) durch Rotation der entgegengesetzten Enden (34), die gemeinsam schwenken, gegeneinander drückt.

6. Scheibenwischer nach einem der vorstehenden Ansprüche 2 bis 4, dadurch gekennzeichnet, daß jeder der Bögen (18) aus einem einzelnen flexiblen Element besteht, das im wesentlichen in Form eines umgekehrten V besteht, dessen Spitze auf dem Mittellinienabschnitt (21) des Elementes liegt; wobei der Mittellinienabschnitt (21) im wesentlichen Omega-förmig ist und ein Paar entgegengesetzter seitlich vorstehender Stifte (22) aufweist, die so gestaltet sind, daß sie in die entsprechenden seitlichen Aufnahmen (23), die durch die stromlinienförmige Struktur (7) gebildet werden, und im Verhältnis zu deren Achse kreuzweise einrasten.

7. Scheibenwischer nach einem der vorstehenden Ansprüche, dadurch gekennzeichnet, daß die stromlinienförmige Struktur einen in Längsrichtung konischen Aufsatz (11) umfaßt, der das erste Ende der stromlinienförmigen Struktur (7) entgegengesetzt zum zweiten Ende dieser Struktur neben der gegliederten Einrichtung (8) definiert; wobei dieser Aufsatz (11) koaxial schwenkbar zur Schwenkachse des ersten (18a) der Bögen neben dem Aufsatz (11) an die Halterung der stromlinienförmigen Struktur (7) angebracht ist, so daß sie mit dieser schwingt.

8. Scheibenwischer nach einem der vorstehenden Ansprüche, dadurch gekennzeichnet, daß der Querschnitt der stromlinienförmigen Struktur (7) entgegengesetzte Längskanten (30) zeigt, deren Dicke nach außen konisch verlauft, die voneinander weg gekrümmt und in einem vorgegebenen relativ geringen Abstand von der Wischerkante (14) des Blattes (9) angeordnet sind, um bei Verwendung über die Außenoberfläche (2) der Windschutzscheibe (3) zu streichen.

9. Scheibenwischer nach einem der vorstehenden Ansprüche, dadurch gekennzeichnet, daß die Steifheit der elastischen Einrichtung (18) an verschiedenen Punkten auf dem Wischerblatt (9) variiert.

## Revendications

1. Essuie-glace (1, 1a) comprenant un élément de raccordement en forme de capuchon (4) solidarisé angulairement d'un arbre rotatif (5) commandant l'essuie-glace, un bras (7) porté sur cet élément de raccordement (4) en s'en projetant radialement et solidarisé angulairement de celui-ci au moyen d'un dispositif articulé (8), et un balai d'essuie-glace flexible (9), porté par le bras (7) et conçu pour coopérer en glissant avec la surface extérieure du parebrise (3), caractérisé en ce que le bras est constitué par une structure creuse, rigide, profilée (7) qui est incurvée et présente, en chaque point de sa longueur, un rayon de courbure concentrique légèrement supérieur à celui de la surface extérieure (2) de l'essuie-glace (3) qui, en section transversale, a pratiquement la forme d'un U et qui reçoit longitudinalement le balai d'essuie-glace (9) sur toute sa longueur, ce balai d'essuie-glace (9) étant disposé dans une portion de fond ouvert (12) de cette structure profilée, avec son bord d'essuyage longitudinal (14) se projetant vers le bas de cette structure profilée en direction du parebrise, l'essuie-glace comprenant également des moyens élastiques (18, 18a) logés à l'intérieur de la structure profilée (7) et raccordant mécaniquement cette structure au balai d'essuie-glace (9), ces moyens élastiques repoussant avec une force prédéterminée le balai d'essuie-glace (9) vers l'extérieur de la structure profilée (7) et étant contraints de manière à permettre au balai d'essuie-glace de prendre différentes courbures en divers points de sa longueur.

2. Balai d'essuie-glace selon la revendication 1, caractérisé en ce que ces moyens élastiques comprennent un certain nombre d'archets flexibles en forme de V (18, 18a) disposés côte à côte en une rangée sur toute la longueur de cette structure profilée (7), avec leurs extrémités opposées respectives (20, 33) adjacentes l'une à l'autre, ces archets (18, 18a) étant articulés, en leur portion médiane, sur la structure profilée (7) de façon à basculer autour d'axes respectifs parallèles l'un à l'autre et tous disposés transversalement par rapport à l'axe longitudinal du bras (7).

3. Essuie-glace selon la revendication 2, caractérisé en ce que le dispositif articulé (8) est conçu pour permettre à l'extrémité du bras (7) adjacente à l'élément de raccordement (4) de pivoter autour d'un axe perpendiculaire à l'axe de rotation de l'arbre de commande (5) et pratiquement parallèle au plan du parebrise (3).

4. Essuie-glace selon la revendication 3, caractérisé en ce que les extrémités opposées (20, 33) des archets (18, 18a) sont solidarisées du bord supérieur (15) du balai d'essuie-glace (9), opposé au bord d'essuyage (14) de ce balai, et en ce que l'axe central de ces archets (18, 18a) coïncide avec le sommet du V défini par chaque archet (18, 18a) et comporte des tétons transversaux opposés respectifs (22) introduits à l'intérieur de paires respectives de trous coaxiaux (23) formés à travers les parois latérales respectives (24) de la structure profilée (7), de façon à basculer autour d'axes parallèles à l'axe de pivotement du dispositif articulé (8).

5. Essuie-glace selon l'une des revendications 2 à 4 précédentes, caractérisé en ce que chaque archet (18) comprend deux bras inclinés (32) ayant une première extrémité (33) solidarisée du balai d'essuie-glace (9) et une deuxième extrémité opposée (34) articulée en un point commun (22) sur cette structure profilée (7), et un ressort (35) conçu pour rappeler les deux bras (32) l'un vers l'autre en faisant pivoter en commun les extrémités opposées (34).

6. Essuie-glace selon l'une des revendications 2 à 4 précédentes, caractérisé en ce que chaque archet (18) est constitué par un seul élément flexible ayant pratiquement la forme d'un V inversé avec son Sommet sur une portion médiane (21) de cet élément, cette portion médiane (21) ayant pratiquement la forme d'un oméga et ayant deux tétons opposés se projetant latéralement (22) conçus pour s'encliqueter à l'intérieur de sièges latéraux respectifs (23) formés à travers la structure profilée (7) et transversalement par rapport à l'axe de cette structure.

7. Essuie-glace selon l'une des revendications précédentes, caractérisé en ce que la structure profilée comprend un capuchon s'effilant longitudinalement (11) définissant une première extrémité de la structure profilée (7) opposée à une deuxième extrémité de celle-ci adjacente au dispositif articulé (8), le capuchon (11) étant articulé sur le reste de la structure profilée (7) coaxialement avec l'axe de basculement d'un premier (18a) de ces archets, adjacent à ce capuchon (11), de façon à basculer en même temps que celui-ci.

8. Essuie-glace selon l'une des revendications précédentes, caractérisé en ce que la section transversale de la structure profilée (7) présente des bords longitudinaux opposés (30) dont l'épaisseur diminue vers l'extérieur, incurvés en s'éloignant l'un de l'autre et disposés à une distance donnée relativement faible du bord d'essuyage (14) du balai (9) de façon à racler, en utilisation, la surface extérieure (2) du parebrise (3).

9. Essuie-glace selon l'une des revendications précédentes, caractérisé en ce que la rigidité des éléments élastiques (18) varie en divers points sur le balai d'essuie-glace (9).

Fig.1

Fig.2

Fig.3

EP 0 280 149 B1